# EUROPÄISCHE PATENTSCHRIFT

(11) **EP 1 266 047 B1**
(45) Veröffentlichungstag und Bekanntmachung des Hinweises auf die Patenterteilung: **05.11.2003**
(21) Anmeldenummer: 01927696.3
(22) Anmeldetag: 23.02.2001
(51) Int. Cl.: C23C 22/34, C23C 22/60, C23C 22/66, C23C 22/68

(54) **KORROSIONSSCHUTZVERFAHREN FÜR METALLOBERFLÄCHEN**
METHOD FOR PROVIDING METAL SURFACES WITH PROTECTION AGAINST CORROSION
PROCEDE POUR PROTEGER DES SURFACES METALLIQUES CONTRE LA CORROSION

(30) Priorität: 04.03.2000 DE 10010758
(43) Veröffentlichungstag der Anmeldung: 18.12.2002
(73) Patentinhaber: Henkel Kommanditgesellschaft auf Aktien, 40589 Düsseldorf-Holthausen (DE)
(72) Erfinder: WICHELHAUS, Winfried, 42489 Wülfrath (DE); SCHENZLE, Bernd, Troy, MI 48083 (US); QUELLHORST, Heike, 40217 Düsseldorf (DE)
(86) Internationale Anmeldenummer: EP0102073
(87) Internationale Veröffentlichungsnummer: WO01066827

(56) Entgegenhaltungen:
- EP-A- 0 949 353
- WO-A-00/71626
- DE-A- 19 621 184
- US-A- 5 584 946

## Beschreibung

Die Erfindung liegt auf dem Gebiet der Korrosionsschutzbehandlung von Fahrzeugkarosserien oder Haushaltsgeräten, wobei auf ausgewählten Nichteisen-Oberflächen eine korrosionsschützende Schicht erzeugt wird. Sie ist besonders geeignet für Metallbauteile, die Oberflächen aus zwei oder mehreren unterschiedlichen Nichteisen-Metallen aufweisen. Dabei liegt ein besonderes Merkmal der Erfindung darin, daß kein toxisches Chrom verwendet werden muß.

Für die Abscheidung korrosionsschützender Schichten auf blanken Metalloberflächen zur Erhöhung des Korrosionsschutzes besteht ein umfangreicher Stand der Technik. Im folgenden sind einige Beispiele für Dokumente aufgeführt, die insbesondere die chromfreie Behandlung von Aluminiumoberflächen zum Gegenstand haben. In der Regel ist eine derartige Behandlung auch für Zinkoberflächen geeignet. Der hierbei gebrauchte Begriff "Konversionsbehandlung" sagt aus, daß Komponenten der Behandlungslösung mit der Metalloberfläche chemisch reagieren, wodurch eine Korrosionsschutzschicht entsteht, in die sowohl Komponenten der Behandlungslösung als auch Metallatome aus der Metalloberfläche eingebaut sind.

Die chromfreie Konversionsbehandlung von Aluminiumoberflächen mit Fluoriden von Bor, Silicium, Titan oder Zirkonium in Verbindung mit organischen Polymeren ist zur Erzielung eines permanenten Korrosionsschutzes und zur Erzeugung einer Grundlage für eine anschließende Lackierung prinzipiell bekannt:

Die **US-A-5 129 967** offenbart Behandlungsbäder für eine No-Rinse-Behandlung (dort als "dried in place conversion coating" bezeichnet) von Aluminium, enthaltend
a) 10 bis 16 g/l Polyacrylsäure oder deren Homopolymere,
b) 12 bis 19 g/l Hexafluorozirkonsäure,
c) 0,17 bis 0,3 g/l Fluorwasserstoffsäure und
d) bis zu 0,6 g/l Hexafluorotitansäure.

**EP-B-8 942** offenbart Behandlungslösungen, vorzugsweise für Aluminiumdosen, enthaltend
a) 0,5 bis 10 g/l Polyacrylsäure oder eines Esters davon und
b) 0,2 bis 8 g /l an mindestens einer der Verbindungen H₂ZrF₆, H₂TiF₆ und H₂SiF₆, wobei der pH-Wert der Lösung unterhalb von 3,5 liegt,
söwie ein wäßriges Konzentrat zum Wiederauffrischen der Behandlungslösung enthaltend
a) 25 bis 100 g/l Polyacrytsäure oder eines Esters davon,
b) 25 bis 100 g/l von mindestens einer der Verbindungen H₂ZrF₆, H₂TiF₆ und H₂SiF₆, und
c) eine Quelle freier Fluoridionen, die 17 bis 120 g/l freies Fluorid liefert.

**DE-C-24 33 704** beschreibt Behandlungsbäder zur Erhöhung der Lackhaftung und des permanenten Korrosionsschutzes auf u.a. Aluminium, die 0,1 bis 5 g/l Polyacrylsäure oder deren Salze oder Ester sowie 0,1 bis 3,5 g/l Ammoniumfluorozirkonat, berechnet als ZrO₂, enthalten können. Die pH-Werte dieser Bäder können über einen weiten Bereich schwanken. Die besten Ergebnisse werden im allgemeinen erhalten, wenn der pH bei 6 - 8 liegt.

**US-A-4 992 116** beschreibt Behandlungsbäder für die Konversionsbehandlung von Aluminium mit pH-Werten zwischen etwa 2,5 und 5, die mindestens drei Komponenten enthalten:
a) Phosphationen im Konzentrationsbereich zwischen 1,1x10⁻⁵ bis 5,3x10⁻³ mol/l entsprechend 1 bis 500 mg/l.
b) 1,1x10⁻⁵ bis 1.3x10⁻³ mol/l einer Fluorosäure eines Elements der Gruppe Zr, Ti, Hf und Si (entsprechend je nach Element 1,6 bis 380 mg/l) und
c) 0,26 bis 20 g/l einer Polyphenolverbindung, erhältlich durch Umsetzung von Poly(vinylphenol) mit Aldehyden und organischen Aminen.

Dabei ist ein Molverhältnis zwischen der Fluorosäure und Phosphat von etwa 2,5 : 1 bis etwa 1 : 10 einzuhalten.

**WO 92/07973** lehrt ein chromfreies Behandlungsverfahren für Aluminium, das als wesentliche Komponenten in saurer wäßriger Lösung 0,01 bis etwa 18 Gew.-% H₂ZrF₆ und 0,01 bis etwa 10 Gew.-% eines 3-(N-C₁₋₄alkyl-N-2-hydroxyethylaminomethyl)-4hydroxystyrol-Polymers verwendet. Fakultative Komponenten sind 0,05 bis 10 Gew.-% dispergiertes SiO₂, 0,06 bis 0,6 Gew.-% eines Lösevermittlers für das Polymer sowie Tensid.

Fahrzeugkarosserien wie beispielsweise Automobilkarosserien werden zur Zeit aus Stahl und/oder anderen metallischen Materialien wie beispielsweise verzinktem Stahl oder Aluminium zusammengefügt. Nach dem Zusammenfügen werden die Karosserien gereinigt und vor dem Lackieren einer Konversionsbehandlung zum Erzielen von ausreichendem Korrosionsschutz und ausreichender Lackhaftung unterzogen. Danach werden die Karosserien lackiert, heutzutage in der Regel durch eine kathodische Elektrotauchlackierung. Einem ähnlichen Verfahrensgang können metallische Komponenten enthaltende Haushaltsgeräte wie beispielsweise Kühlschränke, Gefriertruhen, Waschmaschinen, Wäscheschleudern, Herde, Mikrowellengeräte oder auch metallische Möbel unterzogen werden. Aufgrund der geringeren Anforderungen an den Korrosionsschutz für solche Gegenstände werden diese nach der Konversionsbehandlung in der Regel mit einem Pulverlack lackiert.

Als Konversionsbehandlung ist bei Haushaltsgeräten eine Phosphatierung weit verbreitet. Bei Fahrzeugkarosserien erfolgt die Konversionsbehandlung ausschließlich als sogenannte "schichtbildende" Zinkphosphatierung. Hierfür werden die Fahrzeugkarosserien mit einer wäßrigen Lösung mit einem pH-Wert von etwa 2,5 bis etwa 3,8 in Berührung gebracht, die etwa 0,3 bis 2 g/l Zinkionen und etwa 10 bis etwa 20 g/l Phosphationen enthält. Häufig enthalten diese Phosphatierlösungen zusätzlich etwa 0,3 bis 2 g/l Manganionen und häufig Nickel- oder Kupferionen. Bei dieser Behandlung entsteht auf Stahloberflächen eine Schicht von kristallinen Zinkeisenphosphaten, auf Zink- oder Aluminiumoberflächen eine Schicht aus kristallinen Zinkphosphaten.

Damit diese kristallinen zinkhaltigen Phophatschichten eine ausreichende Wirkung für Korrosionsschutz und Lackhaftung entfalten, wird der eigentliche Phosphatierungsschritt von zusätzlichen Schritten begleitet. Beispielsweise werden die Metalloberflächen vor der Phosphatierung zunächst - in der Regel mehrstufig - gereinigt und anschließend aktiviert. Für den Aktivierungsschritt bringt man die Metalloberflächen mit einer Lösung in Kontakt, die hauptsächlich sekundäre Alkalimetallphosphate sowie suspendierte kolloide Titanphosphate enthält. Dieser Schritt muß sehr sorgfältig kontrolliert werden, um eine ausreichende Qualität der anschließenden Phosphatierung zu gewährleisten. Insbesondere verbrauchen sich die Aktivierbäder im Vergleich zu Phosphatierbädern vergleichsweise rasch, so daß sie in kurzen Zeitabständen von wenigen Tagen bis einigen Wochen erneuert werden müssen. Die Überwachung und Pflege der Aktivierbäder stellt daher einen wesentlichen Anteil des Pftege- und Überwachungsaufwandes für eine Phosphatierlinie dar.

Auf den eigentlichen Phosphatierungsschritt folgt regelmäßig eine sogenannte Nachpassivierung. Durch diese Nachpassivierung werden verbleibende Poren in der kristallinen Phosphatschicht geschlossen und Korrosionsschutz sowie Lackhaftung verbessert. Hierfür werden die phosphatierten Metalloberflächen mit einer wäßrigen Lösung in Berührung gebracht, die unterschiedliche Komponenten enthalten kann. Im praktischen Einsatz sind derzeit Nachpassivierungslösungen auf Basis von sechswertigem Chrom, von komplexen Fluoriden von Titan und/oder Hafnium, von reaktiven Polymeren von Vinylphenolderivaten oder auch von Kupferionen. Auch diese Nachpassivierungsbäder müssen regelmäßig überprüft und nachgestellt werden.

Eine Konversionsbehandlung in Form einer Phosphatierung erfordert also neben der Reinigung in der Regel mindestens 3 Behandlungsbäder für Aktivierung, Phosphatierung und Nachpassivierung, die alle regelmäßig kontrolliert und erforderlichenfalls nachgestellt bzw. erneuert werden müssen. Diese mindestens 3 erforderlichen Bäder und die zusätzlich zwischen ihnen liegenden Spülbäder führen zu einem hohen Platzbedarf und Investitionsaufwand und erhöhen so die Kosten für die Herstellung von Fahrzeugkarosserien und Haushaltsgeräten.

Automobilkarosserien enthalten derzeit in der Regel Oberflächen aus Stahl, häufig in Verbindung mit Oberflächen aus Aluminium und/oder verzinktem oder legierungsverzinktem Stahl. Automobilkarosserien und Haushaltsgeräte können jedoch - von Kunststoffteilen abgesehen - so zusammengesetzt sein, daß ihre metallischen Oberflächen ausschließlich Nichteisen-Oberflächen darstellen. Beispiele solcher Nichteisen-Oberflächen sind Oberflächen von Zink (durch Verwendung von verzinktem Stahl), Aluminium, Magnesium oder Legierungen dieser Elemente untereinander oder mit anderen Metallen. Auch für die Korrosionsschutzbehandlung solcher Gegenstände wird heute ausschließlich die vorstehend beschriebene Phosphatierung eingesetzt.

Die Erfindung stellt sich die Aufgabe, den Aufwand für die korrosionsschützende Behandlung von Automobilkarosserien oder Haushaltsgeräten im Vergleich zum Stand der Technik zu verringern. Ihr liegt die Erkenntnis zugrunde, daß die aufwendige Verfahrensfolge für eine Phosphatierung verkürzt werden kann, wenn die metallischen Oberflächen der Automobilkarosserien oder Haushaltsgeräte praktisch keine Eisenoberflächen aufweisen.

Die US-A-5 584 946 beschreibt ein Verfahren zur temporären Korrosionsschutz-Vorbehandlung (Passivierung) von Oberflächen aus Aluminium oder Aluminiumlegierungen vor einer nachfolgenden Konversionsbehandlung derselben, beispielsweise einer Phosphatierung, Chromatierung oder chromfreien Konversionsbehandlung. Hierbei werden die Oberflächen mit sauren, wäßrigen Lösungen behandelt, die komplexe Fluoride der Elemente B, Si, Ti, Zr oder Hf in Konzentrationen, bezogen auf die Fluoro-Anionen von 100 bsi 4000 mg/l enthalten und pH-Werte im Bereich von 0,3 bis 3,5 aufweisen. Derartige Lösungen enthalten ferner vorzugsweise Polymere, ausgewählt aus Polyacrylaten und Reaktionsprodukten von Poly(vinylphenol) mit Aldehyden und organischen Aminen mit Hydroxy-Funktionen.

Gegenstand der DE-A-196 21 184 ist eine Zinkphosphatierung mit integrierter Nachpassivierung. Bei diesem Verfahren werden Metalloberflächen aus Stahl, verzinktem oder legierungsverzinktem Stahl, Aluminium und/oder aus Al/Mg-Legierungen mit Phosphatierlösungen behandelt, die 0,2 bis 3 g/l Zinkionen, 3 bis 50 g/l Phosphationen, berechnet als PO₄, 0,001 bis 4 g/l Manganionen, 0,001 bis 0,5 g/l eines oder mehrere Polymere, ausgewählt aus Polyethern, Polycarboxylaten, polymeren Phosphonsäuren, polymeren Phosphinocarbonsäuren und stickstoffhaltigen organischen Polymeren und einen oder mehreren Beschleunigern enthalten.

Demgegenüber betrifft die vorliegende Erfindung ein Verfahren zur korrosionsschützenden Behandlung von Fahrzeugkarosserien oder Haushaltsgeräten, die zumindest teilweise eine metallische Oberfläche aufweisen und wobei diese metallische Oberfläche zu mindestens 90 %, bezogen auf die metallische Oberfläche, aus Zink, Aluminium und/oder Magnesium und/oder Legierungen dieser Metalle untereinander oder mit anderen Legierungsbestandteilen besteht, wobei man die Fahrzeugkarosserien oder Haushaltsgeräte reinigt, passiviert und lackiert,
dadurch gekennzeichnet, daß
man die Fahrzeugkarosserien oder Haushaltsgeräte zum Passivieren mit einer wäßrigen Lösung in Kontakt bringt, die einen pH-Wert im Bereich von 1 bis 12 aufweist und die komplexe Fluoride von Ti, Zr, Hf, Si und/oder B in einer solchen Menge, daß der Gehalt an Ti, Zr, Hf, Si und/oder B 20 bis 500 mg/l beträgt, sowie 50 bis 2000 mg/l organische Polymere enthält und wobei die Zusammensetzung der wäßrigen Lösung so gewählt wird, daß sie nicht gleichzeitig Zink und/oder Mangan in Konzentrationen von oberhalb 0,3 g/l und Phosphorsäure bzw. Phosphationen in Konzentrationen von oberhalb 3 g/l enthält, wobei das Passivieren die einzige Konversionsbehandlung darstellt und wobei man nach dem Passivieren mit einem elektrolytisch abscheidbaren Tauchlack oder mit einem Pulverlack lackiert.

Die komplexen Fluoride der genannten Elemente können in Form der entsprechenden Fluorosäuren bzw. deren Alkalimetall- und/oder Ammoniumsalzen in die wäßrige Lösung eingebracht werden. Jedoch ist es auch möglich, die komplexen Fluoride erst in der wäßrigen Lösung selbst durch Reaktion von Flußsäure oder.von Fluoriden mit den Ionen der genannten Metalle zu bilden. Beispielsweise entstehen komplexe Fluoride von Titan oder Zirkon durch Reaktion von Oxiden oder Salzen dieser Elemente mit Flußsäure.

Zusätzlich zu den komplexen Fluoriden kann die wäßrige Lösung freies Fluorid, beispielsweise in Form von Flußsäure oder von Alkalimetall- bzw. Ammoniumfluoriden enthalten. Beispielsweise kann der Gehalt an freiem Fluorid im Bereich von 0,001 bis 1 g/l liegen. Dieser Zusatz von freiem Fluorid erhöht insbesondere im Falle von schmelztauchverzinktem Stahl oder von Aluminium die Beizwirkung der wäßrigen Lösung und damit die Geschwindigkeit der Konversionsschichtbildung.

Vorzugsweise wird das erfindungsgemäße Verfahren für solche Automobilkarosserien und Haushaltsgeräte eingesetzt, die keine Oberflächen aus unbeschichtetem Stahl aufweisen. Jedoch läßt es sich in der Praxis nicht ausschließen, daß auch bei Verwendung von beschichtetem Stahl wie beispielsweise verzinktem Stahl, vorphosphatiertem Stahl oder organisch vorbeschichtetem Stahl an Schnittkanten, Schweißpunkten oder an Schleifstellen die Stahloberfläche bloß liegt. Im Sinne der Erfindung soll jedoch zumindest ein Anteil von 90 %, vorzugsweise von 95 % und insbesondere von 99 % der metallischen Oberfläche aus den vorstehend genannten Metallen bestehen, wobei Zinkoberflächen in der Regel Oberflächen von verzinktem Stahl sind. Nichtmetallische Oberflächen wie beispielsweise Kunststoffoberflächen oder auch Oberflächen von vorphosphatiertem oder organisch vorbeschichtetem Stahl werden bei diesem Flächenvergleich nicht berücksichtigt.

Das erfindungsgemäße Verfahren hat den großen Vorteil, daß gegenüber der üblichen Phosphatierung auf die Teilschritte Aktivierung und Nachpassivierung verzichtet werden kann. Hierdurch verkürzt sich die Vorbehandlungslinie und der Pflegeaufwand für die Bäder sowie der Aufwand für deren Entsorgung nimmt ab. Dies vereinfacht die Verfahrensführung, reduziert die Kosten und verringert die Umweltbelastung.

Wäßrige Behandlungslösungen, die für das erfindungsgemäße Verfahren brauchbar sind, sind prinzipiell im Stand der Technik bekannt. Beispiele hierfür wurden einleitend erwähnt. Derartige Behandlungsbäder wurden bisher für die Behandlung wenig komplexer Bauteile wie beispielsweise Metallbänder, Metallbleche oder Metalldosen eingesetzt. Für komplexe Bauteile wie Automobilkarosserien oder Haushaltsgeräte wurden derartige Behandlungsbäder bisher nicht als einzige Konversionsbehandlung vor der Lackierung verwendet. Insbesondere wurden derartige Behandlungsbäder bisher nicht in Verfahren eingesetzt, bei denen komplexe Metallbauteile unmittelbar nach der Konversionsbehandlung elektrolytisch tauchlackiert oder mit einem Pulverlack beschichtet wurden.

Vorzugsweise enthält die zur Passivierung in der erfindungsgemäßen Verfahrensfolge eingesetzte wäßrige Lösung die komplexen Fluoride von Ti, Zr, Hf, Si und/oder B in einer solchen Menge, daß der Gehalt an Ti, Zr, Hf, Si und/oder B 50 bis 400 mg/l beträgt. Vorzugsweise enthält die wäßrige Lösung 100 bis 1000 mg/l organische Polymere.

Beispielsweise können die organischen Polymere ausgewählt sein aus Epoxidharzen, Aminoplastharzen, Tanninen, Phenol-Formaldehydharzen, Polycarbonsäuren, polymeren Alkoholen und/oder deren Veresterungsprodukten mit Polycarbonsäuren, Poly-4-vinylphenolverbindungen, Aminogruppen enthaltenden Homo- oder Copolymer-Verbindungen und Polymeren oder Copolymeren von Vinylpyrrolidon. Die Verwendung derartiger Polymere auf dem Gebiet der Metalloberflächenbehandlung ist bekannt.

Beispielsweise können die organischen Polymere ausgewählt sein aus Poly-4-vinylphenolverbindungen der allgemeinen Formel (I), 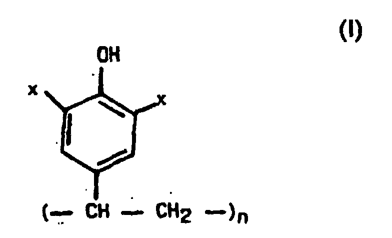 wobei
n eine Zahl zwischen 5 und 100 ist,
x unabhängig voneinander Wasserstoff und/oder CRR₁OH-Gruppen sind, in der R und R₁ Wasserstoff, aliphatische und/oder aromatische Reste mit 1 bis 12 Kohlenstoffatomen sind.

Ferner können die organischen Polymere ausgewählt sein aus Aminogruppen enthaltenden Homo- oder Copolymer-Verbindungen, umfassend wenigstens ein Polymer, das aus der Gruppe ausgewählt ist, bestehend aus a), b), c) oder d), worin:
a) ein Polymermaterial umfaßt, das wenigstens eine Einheit der Formel: 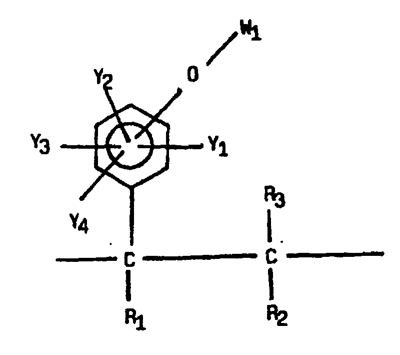 hat, worin:
   R₁ bis R₃ unabhängig für jede der Einheiten aus der Gruppe ausgewählt werden, bestehend aus Wasserstoff, einer Alkylgruppe mit 1 bis 5 Kohlenstoffatomen oder einer Arylgruppe mit 6 bis 18 Kohlenstoffatomen;
   Y₁ bis Y₄ unabhängig für jede der Einheiten aus der Gruppe ausgewählt werden bestehend aus Wasserstoff, -CR₁₁R₅OR₆, -CH₂Cl oder einer Alkyl- oder Arylgruppe mit 1 bis 18 Kohlenstoffatomen oder Z: 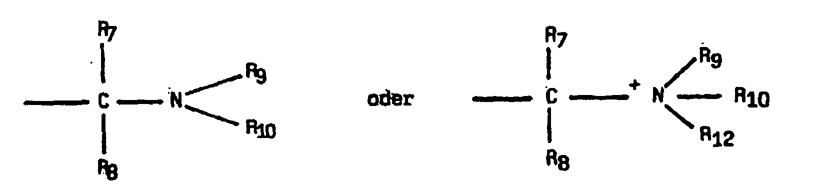 ist, jedoch wenigstens eine Fraktion des Y₁, Y₂, Y₃ oder Y₄ der Homo- oder Copolymer-Verbindung oder -material Z sein muß: R₅ bis R₁₂ unabhängig für jede der Einheiten aus der Gruppe ausgewählt werden, bestehend aus Wasserstoff, einer Alkyl-, Aryl-, Hydroxyalkyl-, Aminoalkyl-, Mercaptoalkyl- oder Phosphoalkylgruppe;
   R₁₂ kann auch -O⁽⁻¹⁾ oder -OH sein;
   W₁ unabhängig für jede der Einheiten aus der Gruppe ausgewählt ist, bestehend aus Wasserstoff, einer Acyl-, einer Acetyl-, einer Benzoylgruppe; 3-Allytoxy-2-hydroxy-propyl; 3-Benzyloxy-2-hydroxy-propyl; 3-Butoxy-2-hydroxy-propyl-; 3-Alkyloxy-2-hydroxy-propyl-; 2-Hydroxyoctyl-; 2-Hydroxyalkyl-; 2-Hydroxy-2-phenylethyl-; 2-Hydroxy-2-alkyl-phenylethyl-; Benzyl-; Methyl-; Ethyl-; Propyl-; Alkyl-; Allyl-; Alkylbenzyl-; Haloalkyl-; Haloalkenyl-; 2-Chlorpropenyl-; Natrium; Kalium; Tetraarylammonium; Tetraalkylammonium; Tetraalkylphosphonium; Tetraarylphosphonium oder ein Kondensationsprodukt des Ethylenoxids, Propylenoxids oder einer Mischung oder eines Copolymer derselben;
b) umfaßt:
   ein Polymermaterial mit wenigstens einer Einheit der Formel: 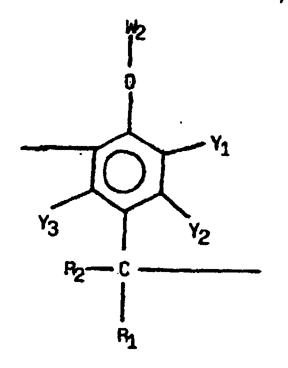 worin:
      R₁ bis R₂ unabhängig für jede der Einheiten aus der Gruppe ausgewählt werden, bestehend aus Wasserstoff, einer Alkylgruppe mit 1 bis 5 Kohlenstoffatomen oder einer Arylgruppe mit 6 bis 18 Kohlenstoffatomen;
      Y₁ bis Y₃ unabhängig für jeder der Einheiten aus der Gruppe ausgewählt werden bestehend aus Wasserstoff, -CR₄R₅OR₆, -CH₂Cl oder einer Alkyl- oder Arylgruppe mit 1 bis 18 Kohlenstoffatomen oder Z: 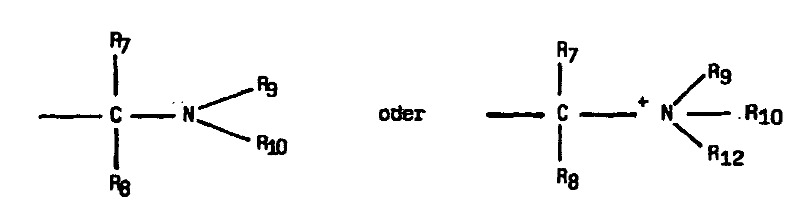 ist, jedoch wenigstens eine Fraktion des Y₁, Y₂ oder Y₃ der Endverbindung Z sein muß; R₄ bis R₁₂ unabhängig für jede der Einheiten aus der Gruppe ausgewählt werden, bestehend aus Wasserstoff, einer Alkyl-, Aryl-, Hydroxyalkyl-, Aminoalkyl-Mercaptoalkyl- oder Phosphoalkylgruppe; R₁₂ kann auch -O⁽⁻¹⁾ oder -OH sein;
      W₂ unabhängig für jede der Einheiten aus der Gruppe ausgewählt ist, bestehend aus Wasserstoff, einer Acyl-, einer Acetyl-, einer Benzoylgruppe; 3-Allyloxy-2-hydroxy-propyl; 3-Benzyloxy-2-hydroxy-propyl-; 3-Alkylbenzyloxy-2-hydroxy-propyl-; 3-Phenoxy-2-hydroxy-propyl; 3-Alkylphenoxy-2-hydroxy-propyl; 3-Butoxy-2-hydroxy-propyl; 3-Alkyloxy-2-hydroxy-propyl; 2-Hydroxyoctyl-; 2-Hydroxylalkyl-; 2-Hydroxy-2-phenylethyl-; 2-Hydroxy-2-alkyl-phenylethyl-; Benzyl-; Methyl-; Ethyl-; Propyl-; Alkyl-; Allyl-; Alkylbenzyl-; Haloalkyl-; Haloalkenyl-; 2-Chlorpropenyl- oder ein Kondensationsprodukt des Ethylenoxids, Propylenoxids oder einer Mischung derselben;
   c) umfaßt:
      ein Copolymer-Material, worin wenigstens ein Teil des Copolymers die Struktur 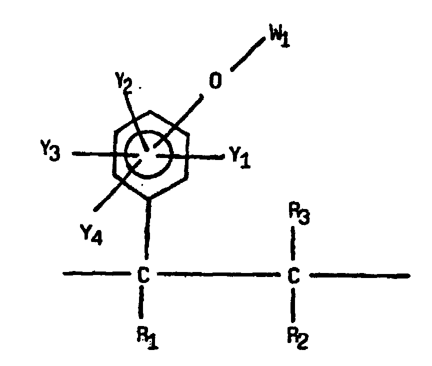 hat und wenigstens eine Fraktion des genannten Teils mit einem oder mehreren Monomeren polymerisiert ist, die unabhängig für jede Einheit ausgewählt sind aus der Gruppe, bestehend aus Acrylnitril, Methacrylnitril, Methylacrylat, Methylmethacrylat, Vinylacetat, Vinylmethylketon, Isopropenylmethylketon, Acrylsäure, Methacrylsäure, Acrylamid, Methacrylamid, n-Amylmethacrylat, Styrol, m-Bromstyrol, p-Bromstyrol, Pyridin, Diallyldimethylammonium-Salze, 1,3-Butadien, n-Butylacrylat, tert.-Butylaminoethylmethacrylat, n-Butylmethacrylat, tert. Butylmethacrylat, n-Butytvinylether, tert.-Butylvinylether, m-Chlorstyrol, o-Chlorstyrol, p-Chtorstyrol, n-Decylmethacrylat, N,N-Diallymelamin, N,N-Di-n-Butylacrylamid, Di-n-Butylitaconat, Di-n-Butylmaleat, Diethylaminoethylmethacrylat, Diethylenglycol-Monovinylether, Diethylfumarat, Diethylitaconat, Diethylvinylphosphat, Vinylphosphonsäure, Diisobutylmaleat, Diisopropylitaconat, Diisopropylmaleat, Dimethylfumarat, Dimethylitaconat, Dimethylmaleat, Di-n-Nonylfumarat, Di-n-Nonylmaleat, Dioctylfumarat, Di-n-Octylitaconat, Di-n-Propylitaconat, n-Dodecylvinylether, saures Ethylfumarat, saures Ethylmaleat, Ethylacrylat, Ethylcinnamat, N-Ethylmethacrylamid, Ethylmethacrylat, Ethylvinylether, 5-Ethyl-2-vinylpyridin, 5-Ethyl-2-vinylpyridin-1-oxid, Glycidylacrylat, Glycidylmethacrylat, n-Hexylmethacrylat, 2-Hydroxyethylmethacrylat, 2-Hydroxypropylmethacrylat, Isobutylmethacrylat, Isobutylvinylether, Isopren, Isopropylmethacrylat, Isopropylvinylether, Itaconsäure, Laurylmethacrylat, Methacrylamid, Methacrylsäure, Methacrylnitril, N-Methylolacrylamid, N-Methylolmethacrylamid, N-Isobutoxymethylacrylamid, N-Isobutoxymethylmethacrylamid, N-Alkyloxymethylacrylamid, N-Alkyloxymethylmethacrylamid, N-Vinylcaprolactam, Methylacrylat, N-Methylmethacrylamid, α-Methylstyrol, m-Methylstyrol, o-Methylstyrol, p-Methylstyrol, 2-Methyl-5-vinylpyridin, n-Propylmethacrylat, Natrium-p-styrolsulfonat, Stearylmethacrylat, Styrol, p-Styrolsulfonsäure, p-Styrolsulfonamid, Vinylbromid, 9-Vinylcarbazol, Vinylchlorid, Vinylidenchlorid, 1-Vinylnaphthalin, 2-Vinylnaphtalin, 2-Vinylpyridin, 4-Vinylpyridin, 2-Vinylpyridin-N-oxid, 4-Vinylpyrimidin, N-Vinylpyrrolidon; und W₁, Y₁-Y₄ und R₁-R₃ wie unter a) beschrieben sind;
   d) umfaßt ein Kondensationspolymer aus den polymeren Materialien a), b) oder c), wobei eine kondensierbare Form von a), b), c) oder eine Mischung derselben mit einer zweiten Verbindung kondensiert wird, die ausgewählt ist aus der Gruppe bestehend aus Phenolen, Tanninen, Novolak-Harzen, Lignin-Verbindungen, zusammen mit Aldehyden, Ketonen oder deren Mischungen, um ein Kondensationsharz-Produkt herzustellen, wobei das Kondensationsharz-Produkt durch Zugabe von "Z" zu wenigstens einem Teil desselben, durch Reaktion des Harzproduktes mit 1) einem Aldehyd oder Keton 2) einem sekundären Amin dann weiter reagiert, unter Bildung eines Endaddukts, das mit einer Säure reagieren kann.

Vorzügsweise ist das vorstehend beschriebene Polymer dadurch gekennzeichnet, daß wenigstens eine Fraktion der Gruppen Z des organischen Polymers eine Polyhydroxyalkylamin-Funktionalität aufweist, die aus der Kondensation eines Amins oder von Ammoniak mit einer Ketose oder Aldose stammt, die 3 bis 8 Kohlenstoff-Atome aufweist.

Weiterhin kann das organische Polymer ein Kondensationsprodukt eines Polyvinylphenols mit einer Molmasse im Bereich von 1000 bis 10000 mit Formaldehyd oder Paraformaldehyd und mit einem sekundären organischen Amin darstellen. Dabei ist das sekundäre organische Amin vorzugsweise ausgewählt aus Methylethanolamin und N-Methylglucamin.

Stellt das organische Polymer Polycarbonsäure oder deren Anionen dar, so wählt man es vorzugsweise aus aus Polymeren oder Copolymeren von Acrylsäure, Methacrylsäure oder deren Veresterungsprodukten mit niederen Alkoholen, beispielsweise mit 1 bis 4 C-Atomen. Dabei können die Lösungen oder Suspensionen der Polycarbonsäuren zusätzlich polymere Alkohole wie beispielsweise Polyvinylalkohol und/oder deren Veresterungsprodukte mit der Polycarbonsäure enthalten. In einer derartigen Lösung oder Suspension kann der polymere Alkohol und die Polycarbonsäure nebeneinander vorliegen. Sie vernetzen dann beim Trocknen der Beschichtung durch zumindest partielle Esterbildung untereinander.

Ferner kann die wäßrige Lösung Polymere oder Copolymere von Vinylpyrrolidon enthalten. Als Homo- oder Copolymere von Vinylpyrrolidon kommen beispielsweise die in Tabelle 1 aufgelisteten Polymere bzw. Copolymere der dort angeführten Monomere in Betracht.

**Tabelle 1:**

| Beispiele für Homo- oder Copolymere von Vinylpyrrolidon | |
|---|---|
| **Bezeichnung** | **Handelsname bzw. Hersteller** |
| Vinylpyrrolidon, Homopolymer | Luviskol^{R}, BASF / ISP |
| Vinylpyrrolidon/Vinylacetat | Luviskol^{R}, BASF / ISP |
| Vinylpyrrolidon/Vinylcaprolactam | Luvitec^{R}, BASF |
| Vinylpyrrolidon/Vinylimidazol | Luvitec^{R}, BASF |
| Vinylpyrrolidon/Vinylimidazoliummethylsulfat | Luvitec, BASF |
| Vinylpyrrolidon/Na-methacrylat | Luvitec^{R}, BASF |
| Vinylpyrrolidon/Olefine | ISP^{R}, Antaron |
| Vinylpyrrolidon/Dimethylaminoethylmethacrylat | ISP^{R} |
| Vinylpyrrolidon/Dimethylaminopropylmethacrylamid | ISP^{R}, Styleze |
| Vinylpyrrolidon/Dimethylaminoethylmethacrylat Ammoniumsalz | ISP^{R}, Gafquat |
| Vinylpyrrolidon/Vinylcaprolactam/Dimethylaminoethylmethacrylat | ISP^{R} |
| Vinylpyrrolidon/Methacrylamidopropyltrimethylammoniumchlorid | ISP^{R}, Gafquat |
| Vinylpyrrolidon/Vinylcaprolactam/Dimethylaminoethylmethacrylat | ISP^{R}, Advantage |
| Vinylpyrrolidon/Styrol | ISP^{R}, Antara |

Verwendet man in der erfindungsgemäßen Verfahrensfolge Polymere oder Copolymere von Vinylpyrrotidon, so weist die Anwendungslösung vorzugsweise einen pH-Wert im Bereich von 1 bis 6 auf, wobei je nach Substrat und Applikationsart sowie Einwirkungsdauer engere pH-Bereiche bevorzugt sein können. Bei Behandlung von Aluminiumoberflächen wählt man vorzugsweise einen pH-Wert im Bereich von 2 bis 4, bei Behandlung von Zink oder verzinktem Stahl im Bereich von 3 bis 5.

Die erfindungsgemäße Verfahrensfolge kann auch auf Automobilkarosserien oder Haushaltsgeräte angewendet werden, die teilweise Oberflächen aus vorphosphatiertem oder organisch vorbeschichtetem Stahl oder entsprechend vorbeschichtetem verzinkten Stahl oder Aluminium aufweisen. In diesem Falle stellt man den pH-Wert der wäßrigen Lösung vorzugsweise auf einen Bereich von etwa 3 bis etwa 10 ein. Dabei kann ein Bereich von etwa 3,5 bis etwa 5 bevorzugt sein. Die bereits vorhandene Korrosionsschutzschicht wird hierbei nicht angegriffen und teilweise in ihrer Korrosionsschutzwirkung noch verstärkt.

Je nach Substrat kann die wäßrige Lösung zusätzlich jeweils 0,001 bis 2, vorzugsweise 0,005 bis 0,5 g/l Ionen eines oder mehrerer der Metalle Mn, Ce, Li, V, W, Mo, Mg, Zn, Co und Ni enthalten. Aus Umweltgründen wird man jedoch versuchen, auf die Verwendung von Co und Ni zu verzichten. Diese zusätzlichen Metallionen können Korrosionsschutzwirkung und Lackhaftung weiter verbessern.

Weiterhin kann die wäßrige Lösung zusätzlich jeweils 0,001 bis 1,5, vorzugsweise 0,1 bis 1 g/l Phosphorsäure, phosphorige Säure, Phosphonsäure und/oder jeweils deren Anionen und/oder jeweils deren Ester enthalten. Dabei sind Ester so zu wählen, daß sie wasserlöslich oder wasserdispergierbar sind. Auch diese Zusätze verbessern Korrosionsschutzwirkung und Lackhaftung. Jedoch ist gemäß dem Grundgedanken der vorliegenden Erfindung darauf zu achten, keine solche Kombination von Zusätzen zu wählen, die zur Bildung einer kristallinen zinkhaltigen Phosphatschicht führt. Denn dies würde zu einer konventionellen Zinkphosphatschicht führen, die im Stand der Technik bekannt ist und nur dann eine ausreichende Korrosionsschutzwirkung mit sich bringt, wenn zusätzlich die eingangs erwähnten Schritte der Aktivierung und der Nachpassivierung ausgeführt werden. Dies soll jedoch im Rahmen der vorliegenden Erfindung gerade vermieden werden. Beispielsweise gelingt dies dadurch, daß die Behandlungslösung nicht gleichzeitig Zink und/oder Mangan in Konzentrationen von oberhalb 0,3 g/l und Phosphorsäure bzw. Phosphationen in Konzentrationen von oberhalb 3 g/l enthält.

Vorteilhaft ist es jedoch, wenn die wäßrige Lösung weiterhin eine oder mehrere Komponenten enthält, die auf dem technischen Gebiet der Phosphatierung als sogenannte Phosphatierungsbeschleuniger bekannt sind. Bei der Phosphatierung haben derartige Beschleuniger die Hauptaufgabe, die Bildung von Blasen elementaren Wasserstoffs auf der Metalloberfläche zu verhindern. Dieser Effekt wird auch als Depolarisierungseffekt bezeichnet. Wie bei der konventionellen Phosphatierung hat dies auch bei dem erfindungsgemäßen Verfahren zur Folge, daß die Bildung der Konversionsschicht rascher erfolgt und daß diese gleichmäßiger ausgebildet wird. Demgemäß ist es bevorzugt, daß die wäßrige Lösung einen oder mehrere Phosphatierungsbeschleuniger ausgewählt aus
0,05 bis 2 g/l m-Nitrobenzolsulfonationen,
0,1 bis 10 g/l Hydroxylamin in freier oder gebundener Form,
0,05 bis 2 g/l m-Nitrobenzoationen,
0,05 bis 2 g/l p-Nitrophenol,
1 bis 70 mg/l Wasserstoffperoxid in freier oder gebundener Form,
0,05 bis 10 g/l organische N-Oxide
0,1 bis 3 g/l Nitroguanidin
1 bis 500 mg/l Nitritionen
0,5 bis 5 g/l Chlorationen
enthält.

Da ein besonderes Ziel der erfindungsgemäßen Verfahrensfolge darin besteht, auf die Verwendung von toxischen Chromverbindungen zu verzichten, ist es bevorzugt, daß die wäßrige Lösung frei ist von Chrom. Zusätze von Chromverbindungen zu der wäßrigen Lösung könnten sich zwar im Einzelfall positiv auf den Korrosionsschutz auswirken, jedoch ist der Korrosionsschutz, der sich mit dem erfindungsgemäßen Verfahren erzielen läßt, auch ohne Verwendung von Chromverbindungen auf dem betroffenen Anwendungsgebiet ausreichend.

Automobilkarosserien werden häufig aus unterschiedlichen Materialien gefertigt. Beispielsweise können auf unterschiedliche Weise verzinkte Stähle untereinander oder mit Bauteilen aus Aluminium und/oder Magnesium bzw. jeweils deren Legierungen kombiniert werden. Eine besondere Stärke des erfindungsgemäßen Verfahrens liegt darin, daß auch in solchen Fällen auf den unterschiedlichen Materialien bei der Passivierung eine wirksame Korrosionsschutzschicht erzeugt wird. Demnach ist eine spezielle Ausführungsform der Erfindung dadurch gekennzeichnet, daß die Fahrzeugkarosserien oder Haushaltsgeräte Oberflächen aus mindestens 2 Materialien ausgewählt aus Zink, Aluminium, Magnesium, Legierungen dieser Metalle untereinander oder mit anderen Legierungsbestandteilen aufweisen.

Die im Passivierungsschritt der erfindungsgemäßen Verfahrensfolge eingesetzte wäßrige Lösung hat vorzugsweise eine Temperatur zwischen Umgebungstemperatur (etwa 15 bis 20 °C) bis etwa 70 °C. Dabei ist der Temperaturbereich von 25 bis 40 °C bevorzugt. Die Automobilkarosserien oder Haushaltsgeräte können mit der wäßrigen Lösung durch Bespritzen mit der wäßrigen Lösung oder durch Eintauchen in die wäßrige Lösung in Kontakt gebracht werden. Spritzverfahren sind hierbei bevorzugt. Generell läßt man für den Passivierungsschritt die wäßrige Lösung für eine Zeitdauer im Bereich von etwa 1 bis etwa 5 Minuten auf die Automobilkarosserien oder Haushaltsgeräte einwirken. Dabei ist bei Spritzverfahren ein Zeitraum im Bereich von 1 bis 3 Minuten, bei Tauchverfahren ein Zeitraum von 2 bis 5 Minuten bevorzugt.

Erfindungsgemäß folgt auf den Schritt der Passivierung eine Lackierung .der Fahrzeugkarosserien oder Haushaltsgeräte mit einem elektrolytisch abscheidbaren Tauchlack oder mit einem Pulverlack. Für Fahrzeugkarosserien ist die elektrolytische Tauchlackierung, insbesondere die kathodische Tauchlackierung bevorzugt. Hierfür sind auch moderne bleifreie oder bleiarme kathodisch abscheidbare Elektrotauchlacke geeignet, also solche Tauchlacke, die weniger als 500 mg Blei pro kg Trockensubstanz in der Lacksuspension enthalten. Auch Haushaltsgeräte können elektrolytisch tauchlackiert werden. Aus Kostengründen zieht man hierfür jedoch eine Pulverlackierung vor.

Die erfindungsgemäße Verfahrensfolge ist also gekennzeichnet durch die wesentlichen Teilschritte Reinigen, Passivieren und Lackieren. Zwischen diesen essentiellen Verfahrensschritten können eine oder mehrere Spülstufen mit Brauchwasser, Stadtwasser oder vollentsalztem Wasser vorgesehen werden. Für die Spülschritte können Spritz- oder Tauchverfahren eingesetzt werden. Die Ausführungsbeispiele zeigen eine typische Verfahrensfolge. Allerdings handelt es sich hierbei um Laborversuche, wo zwischen Passivieren und Lackieren ein längerer Zeitraum verstreicht als bei der technischen Herstellung von Automobilkarosserien oder Haushaltsgeräten. Deswegen wurden die Probebleche nach Passivieren und Spülen durch Abblasen mit Preßluft und Lagern im Trockenschrank getrocknet. Im technischen Einsatz ist eine solche Trocknung dann erforderlich, wenn nach der Passivierung mit einem Pulverlack lackiert wird. Lackiert man durch elektrolytische Tauchlackierung, ist es nicht erforderlich, die Bauteile nach Passivierung und Spülen zu trocknen, bevor sie in das Lackbad eingefahren werden.

### Ausführungsbeispiele

Für die Versuche wurden folgende Substrate verwendet:
Feuerverzinkte Stahlbleche (HDG),
elektrolytisch verzinkte Stahlbleche (EG),
Aluminiumbleche der Qulität Al 6016 (AC 120).

Die Probebleche wurden dem nachstehenden Verfahrensgang unterzogen, wobei alle Schritte im Tauchverfahren durchgeführt wurden:
1. Reinigen mit einem alkalischen Reiniger: Ridoline^{R} 1250i (2 %ig, 65 °C, 5 Minuten),
2. Spülen mit vollentsalztem Wasser,
3. Passivieren durch Behandlung mit einem Testprodukt gemäß Tabelle 2 (pH 4, 30 °C, 3 Minuten),
4. Spülen mit vollentsalztem Wasser,
5. Trocknen durch Abblasen mit Preßluft und Lagern im Trockenschrank bei 55 °C,
6. kathodische Elektrotauchlackierung mit dem bleifreien Elektrotauchlack Cathoguard^{R} CG 310 der Firma BASF.

An den so vorbehandelten Blechen wurden folgende Korrosionstests durchgeführt, deren Ergebnisse in Tabelle 3 zusammengestellt sind:
Wechselklimatest nach VDA 621-415 über 10 Runden, In Tabelle 3 ist die Lackunterwanderung am Ritz über die halbe Ritzbreite (U/2) in mm eingetragen.
Steinschlagtest nach VDA 621-427. Die Lackhaftung wird als K-Wert angegeben, wobei 1 der beste Wert (keine Lackabplatzung), 10 der schlechteste Wert (vollständige Lackablösung) darstellt.

Kupfer-/Essigsäure-beschleunigter Salzsprühtest nach DIN 50021 (CASS, 10 Tage) bzw. neutraler Salzsprühtest nach DIN 50021 (SS, 20 Tage). Angegeben ist die Lackunterwanderung entsprechend dem Wechselklimatest.

**Tabelle 2:**

| Testprodukte | |
|---|---|
| Testprodukt | Zusammensetzung |
| Testprodukt 1 | 75 mg/l Ti als TiF₆²⁻ 125 mg/l Kondensationsprodukt eines Polyvinylphenols mit einer Molmasse im Bereich von 1000 bis 10000 mit Formaldehyd und n-Methylglucamin |
| Testprodukt 2 | 75 mg/l Ti als TiF₆²⁻ 250 mg/l Vinylpyrrolidon-Vinylcaprolactam-Copolymer |
| Testprodukt 3 | 400 mg/l Zr als ZrF₆²⁻ 750 mg/l modifizierte Polyacrylsaure (Acumer^{R} 1510, Rohm und Haas) |
| Testprodukt 4 | 400 mg/l Zr als ZrF₆²⁻ 250 mg/l modifiziertes Vinylpyrrolidon-Vinylcaprolactam-Copolymer |
| Testprodukt 5 | 150 mg/l Ti als TiF₆²⁻ 2000 mg/l Kondensationsprodukt eines Polyvinylphenols mit einer Molmasse im Bereich von 1000 bis 10000 mit Formaldehyd und n-Methylglucamin 350 mg/l Phosphat 200 mg/l Mn |

**Tabelle 3:**

| Korrosionsschutzergebnisse | | | | | | |
|---|---|---|---|---|---|---|
| a) Substrat: Aluminium AC120 | | | | | | |
| Testprodukt Nr. | CASS (DIN 50021) | | | | | |
| | U/2 (mm) | | K-Wert | | | |
| 1 | 0,5 | | 8 | | | |
| 2 | 0,4 | | 7 | | | |
| nur gereinigt (Vergleich) | 0,6 | | 9 | | | |

| b) Substrat: EG | | | | | | |
|---|---|---|---|---|---|---|
| Testprodukt Nr. | SS (DIN 50021) | | | VDA 621-415 | | |
| | U/2 (mm) | | K-Wert | U/2 (mm) | | K-Wert |
| 1 | 5 | | 9,5 | 2,5 | | 7 |
| 2 | 5,1 | | 7 | 1,7 | | 7 |
| 3 | 6,2 | | 9,5 | | | |
| 4 | 5,1 | | 7 | | | |
| 5 | | | | 2,8 | | 7 |
| nur gereinigt (Vergleich) | | | | 2,8 | | 10 |

| Freibewitterungstest (1 Jahr) mit Vollaufbau lackiert | | | | | | |
|---|---|---|---|---|---|---|
| Testprodukt | | U/2 | | | K-Wert | |
| 5 | | 0,2 | | | 1,5 | |

| c) Substrat: HDG | | | | | | |
|---|---|---|---|---|---|---|
| Testprodukt Nr. | SS (DIN 50021) | | | VDA 621-415 | | |
| | U/2 (mm) | | K-Wert | U/2 (mm) | | K-Wert |
| 1 | 4,2 | | 7,5 | 2,8 | | 8,5 |
| 2 | 3,5 | | 7,5 | 3,2 | | 8 |
| 3 | 4,8 | | 9,5 | | | |
| 4 | 3,2 | | 7,5 | | | |
| 5 | | | | 1,5 | | 8 |
| nur gereinigt (Vergleich) | | | | 4,8 | | 10 |

| Freibewitterungstest (1 Jahr) mit Vollaufbau lackiert | | | | | | |
|---|---|---|---|---|---|---|
| Testprodukt | | U/2 | | | K-Wert | |
| 5 | | 0,2 | | | 2 | |

Weiterhin wurde ein Test darüber durchgeführt, wie sich das Vorbehandlungsverfahren auf Schleifstellen an vorphosphatiertem verzinktem Stahl verhält. In der Praxis treten derartige Schleifstellen auf, wenn bei einer Automobilkarosserie Fehlstellen durch Abschleifen ausgebessert werden.

Für den Test wurde elektrolytisch verzinkter, vorphosphatierter Stahl ungeschliffen und geschliffen mit Testprodukten 1 und 2 behandelt. Anschließend wurde der kathodische Elektrotauchlack Cathoguard^{R} 310 aufgebracht. Der Korrosionstest erfolgte als Wechselklimatest gemäß VDA 621-415 über 10 Runden verbunden mit Steinschlagtest nach VDA 621-427. Die Ergebnisse sind in Tabelle 4 zusammengefaßt.

**Tabelle 4**

| **Schleifstellenuntersuchungen. Substrat: Elektrolytisch verzinkter, vorphosphatierter Stahl** | | | | |
|---|---|---|---|---|
| | **EG**_{**prephos**} **ungeschliffen** | | **EG**_{**prephos**} **geschliffen** | |
| **Testprodukt** | **U/2 [mm]** | **K** | **U/2 [mm]** | **K** |
| 1 | 0,3 | 4 | 1,0 | 3,5 |
| 2 | 0,4 | 3,5 | 0,9 | 3 |

## Patentansprüche

1. Verfahren zur korrosionsschützenden Behandlung von Fahrzeugkarosserien oder Haushaltsgeräten, die zumindest teilweise eine metallische Oberfläche aufweisen und wobei diese metallische Oberfläche zu mindestens 90 %, bezogen auf die metallische Oberfläche, aus Zink, Aluminium und/oder Magnesium und/oder Legierungen dieser Metalle untereinander oder mit anderen Legierungsbestandteilen besteht, wobei man die Fahrzeugkarosserien oder Haushaltsgeräte reinigt, passiviert und lackiert,
**dadurch gekennzeichnet, daß**
man die Fahrzeugkarosserien oder Haushaltsgeräte zum Passivieren mit einer wäßrigen Lösung in Kontakt bringt, die einen pH-Wert im Bereich von 1 bis 12 aufweist und die komplexe Fluoride von Ti, Zr, Hf, Si und/oder B in einer solchen Menge, daß der Gehalt an Ti, Zr, Hf, Si und/oder B 20 bis 500 mg/l beträgt, sowie 50 bis 2000 mg/l organische Polymere enthält und wobei die Zusammensetzung der wäßrigen Lösung so gewählt wird, daß sie nicht gleichzeitig Zink und/oder Mangan in Konzentrationen von oberhalb 0,3 g/l und Phosphorsäure bzw. Phosphationen in Konzentrationen von oberhalb 3 g/l enthält, wobei das Passivieren die einzige Konversionsbehandlung darstellt und wobei man nach dem Passivieren mit einem elektrolytisch abscheidbaren Tauchlack oder mit einem Pulverlack lackiert.

2. Verfahren nach Anspruch 1, **dadurch gekennzeichnet, daß** die wäßrige Lösung komplexe Fluoride von Ti, Zr, Hf, Si und/oder B in einer solchen Menge enthält, daß der Gehalt an Ti, Zr, Hf, Si und/oder B 50 bis 400 mg/l beträgt.

3. Verfahren nach einem der Ansprüche 1 oder 2, **dadurch gekennzeichnet, daß** die wäßrige Lösung 100 bis 1000 mg/l organische Polymere enthält.

4. Verfahren nach einem oder mehreren der Ansprüche 1 bis 3, **dadurch gekennzeichnet, daß** die organischen Polymere ausgewählt sind aus Epoxidharzen, Aminoplastharzen, Tanninen, Phenol-Formaldehydharzen, Polycarbonsäuren, polymeren Alkoholen und/oder deren Veresterungsprodukten mit Polycarbonsäuren, Poly-4-vinylphenolverbindungen, aminogruppen enthaltenden Homo- oder Copolymer-Verbindungen und Polymeren oder Copolymeren von Vinylpyrrolidon.

5. Verfahren nach Anspruch 4, **dadurch gekennzeichnet, daß** die organischen Polymere ausgewählt sind aus Poly-4-vinylphenolverbindungen der allgemeinen Formel (I), 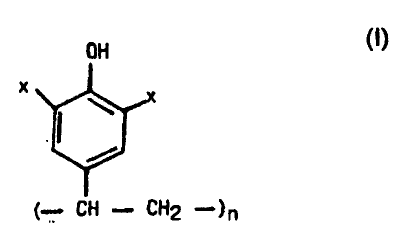 wobei
n eine Zahl zwischen 5 und 100 ist,
x unabhängig voneinander Wasserstoff und/oder CRR₁OH-Gruppen sind, in der R und R₁ Wasserstoff, aliphatische und/oder aromatische Reste mit 1 bis 12 Kohlenstoffatomen sind.

6. Verfahren nach einem oder mehreren der Ansprüche 1 bis 5, **dadurch gekennzeichnet, daß** die wäßrige Lösung zusätzlich jeweils 0,001 bis 2 g/l Ionen eines oder mehrerer der Metalle Mn, Ce, Li, V, W, Mo, Mg, Zn, Co und Ni enthält.

7. Verfahren nach einem oder mehreren der Ansprüche 1 bis 6, **dadurch gekennzeichnet, daß** die wäßrige Lösung zusätzlich jeweils 0,001 bis 1,5 g/l Phosphorsäure, Phosphorige Säure, Phosphonsäure und/oder jeweils deren Anionen und/oder jeweils deren Ester enthält.

8. Verfahren nach einem oder mehreren der Ansprüche 1 bis 7, **dadurch gekennzeichnet, daß** die wäßrige Lösung einen oder mehrere Phosphatierungsbeschleuniger ausgewählt aus
0,05 bis 2 g/l m-Nitrobenzolsulfonationen,
0,1 bis 10 g/l Hydroxylamin in freier oder gebundener Form,
0,05 bis 2 g/l m-Nitrobenzoationen,
0,05 bis 2 g/l p-Nitrophenol,
1 bis 70 mg/l Wasserstoffperoxid in freier oder gebundener Form,
0,05 bis 10 g/l organische N-Oxide
0,1 bis 3 g/l Nitroguanidin
1 bis 500 mg/l Nitritionen
0,5 bis 5 g/l Chlorationen
enthält.

9. Verfahren nach einem oder mehreren der Ansprüche 1 bis 8, **dadurch gekennzeichnet, daß** die wäßrige Lösung frei ist von Chrom.

10. Verfahren nach einem oder mehreren der Ansprüche 1 bis 9, **dadurch gekennzeichnet, daß** die Fahrzeugkarosserien oder Haushaltsgeräte Oberflächen aus mindestens zwei Materialien ausgewählt aus Zink, Aluminium, Magnesium, Legierungen dieser Metalle untereinander oder mit anderen Legierungsbestandteilen aufweisen.

## Claims

1. A process for the anticorrosion treatment of vehicle bodies or domestic appliances at least partly having a metal surface of which at least 90% - based on the metal surface - consists of zinc, aluminium and/or magnesium and/or alloys of these metals with one another or with other alloying constituents, the vehicle bodies or domestic appliances being cleaned, passivated and painted, **characterized in that**, for passivation, the vehicle bodies or domestic appliances are contacted with an aqueous solution which has a pH of 1 to 12 and which contains complex fluorides of Ti, Zr, Hf, Si and/or B in such a quantity that the Ti, Zr, Hf, Si and/or B content is from 20 to 500 mg/l and 50 to 2,000 mg/l organic polymers; the composition of the aqueous solution is selected so that it does not simultaneously contain zinc and/or manganese in concentrations above 0.3 g/l and phosphoric acid or phosphate ions in concentrations above 3 g/l; the passivation is the sole conversion treatment; and, after passivation, the vehicle bodies or domestic appliances are coated with a dipping paint suitable for electrolytic deposition or with a powder coating.

2. A process as claimed in claim 1, **characterized in that** the aqueous solution contains complex fluorides of Ti, Zr, Hf, Si and/or B in such a quantity that the Ti, Zr, Hf, Si and/or B content is from 50 to 400 mg/l.

3. A process as claimed in claim 1 or 2, **characterized in that** the aqueous solution contains 100 to 1,000 mg/l of organic polymers.

4. A process as claimed in one or more of claims 1 to 3, **characterized in that** the organic polymers are selected from epoxy resins, amino resins, tannins, phenol/formaldehyde resins, polycarboxylic acids, polymeric alcohols and/or esterification products thereof with polycarboxylic acids, poly-4-vinyl phenol compounds, aminofunctional homo- or copolymer compounds and polymers or copolymers of vinyl pyrrolidone.

5. A process as claimed in claim 4, **characterized in that** the organic polymers are selected from poly-4-vinylphenol compounds corresponding to general formula (I): 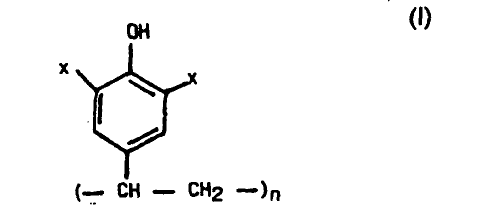 in which
n is a number of 5 to 100 and
the x's independently of one another represent hydrogen and/or CRR₁OH groups where R and R₁ represent hydrogen, aliphatic and/or aromatic radicals containing 1 to 12 carbon atoms.

6. A process as claimed in one or more of claims 1 to 5, **characterized in that** the aqueous solution additionally contains 0.001 to 2 g/l of ions of one or more of the metals Mn, Ce, Li, V, W, Mo, Mg, Zn, Co and Ni.

7. A process as claimed in one or more of claims 1 to 6, **characterized in that** the aqueous solution additionally contains 0.001 to 1.5 g/l of phosphoric acid, phosphorous acid, phosphonic acid and/or anions thereof and/or esters thereof.

8. A process as claimed in one or more of claims 1 to 7, **characterized in that** the aqueous solution contains one or more phosphating accelerators selected from
0.05 to 2 g/l m-nitrobenzene sulfonate ions,
0.1 to 10 g/l hydroxylamine in free or bound form,
0.05 to 2 g/l m-nitrobenzoate ions,
0.05 to 2 g/l p-nitrophenol,
1 to 70 mg/l hydrogen peroxide in free or bound form,
0.05 to 10 g/l organic N-oxides,
0.1 to 3 g/l nitroguanidine,
1 to 500 mg/l nitrite ions,
0.5 to 5 g/l chlorate ions.

9. A process as claimed in one or more of claims 1 to 8, **characterized in that** the aqueous solution is free from chromium.

10. A process as claimed in one or more of claims 1 to 9, **characterized in that** the vehicle bodies or domestic appliances have surfaces of at least two materials selected from zinc, aluminium, magnesium, alloys of these metals with one another or with other alloying constituents.

## Revendications

1. Procédé pour le traitement de protection contre la corrosion de carrosseries de véhicules automobiles ou d'appareils ménagers qui présentent au moins en partie une surface métallique, ladite surface métallique étant constituée, jusqu'à concurrence d'au moins 90 %, rapportés à la surface métallique, de zinc, d'aluminium et/ou de magnésium et/ou d'alliages de ces métaux les uns avec les autres ou avec d'autres constituants d'alliages, dans lequel on soumet les carrosseries de véhicules automobiles ou les appareils ménagers à un nettoyage, à une passivation et à un laquage, **caractérisé en ce qu'**on amène les carrosseries de véhicules automobiles ou les appareils ménagers, pour la passivation, en contact avec une solution aqueuse qui présente une valeur de pH dans le domaine de 1 à 12 et qui contient des fluorures complexes de Ti, Zr, Hf, Si et/ou B en une quantité telle que la teneur en Ti, Zr, Hf, Si et/ou B s'élève de 20 à 500 mg/l, ainsi que des polymères organiques à concurrence de 50 à 2000 mg/l, et dans lequel on sélectionne la composition de la solution aqueuse de telle sorte qu'elle ne contienne pas de manière simultanée du zinc et/ou du manganèse dans des concentrations supérieures à 0,3 g/l et de l'acide phosphorique respectivement des ions phosphates dans des concentrations supérieures à 3 g/l, dans lequel la passivation représente le seul traitement de conversion et dans lequel, après la passivation, on procède au laquage avec une laque à immersion apte à se déposer par électrolyse ou avec une laque pulvérulente.

2. Procédé selon la revendication 1, **caractérisé en ce que** la solution aqueuse contient des fluorures complexes de Ti, Zr, Hf, Si et/ou B en une quantité telle que la teneur en Ti, Zr, Hf, Si et/ou B s'élève de 50 à 400 mg/l.

3. Procédé selon l'une quelconque des revendications 1 ou 2, **caractérisé en ce que** la solution aqueuse contient des polymères organiques à concurrence de 100 à 1000 mg/l.

4. Procédé selon une ou plusieurs des revendications 1 à 3, **caractérisé en ce que** les polymères organiques sont choisis parmi le groupe comprenant des résines époxydes, des résines aminoplastes, des tannins, des résines de phénol-formaldéhyde, des acides polycarboxyliques, des alcools polymères et/ou leurs produits d'estérification avec des acides polycarboxyliques, des composés de poly-4-vinylphénol, des composés d'homopolymères ou de copolymères contenant des groupes amino, et des polymères ou des copolymères de vinylpyrrolidone.

5. Procédé selon la revendication 4, **caractérisé en ce que** les polymères organiques sont choisis parmi des composés de poly-4-vinylphénol répondant à la forme générale (I) 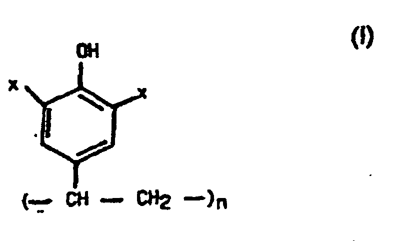 dans laquelle
n représente un nombre entre 5 et 100,
x représente, de manière indépendante, un atome d'hydrogène et/ou des groupes CRR¹OH dans lesquels R et R¹ représentent un atome d'hydrogène, des radicaux aliphatiques et/ou aromatiques contenant de 1 à 12 atomes de carbone.

6. Procédé selon une ou plusieurs des revendications 1 à 5, **caractérisé en ce que** la solution aqueuse contient en outre, respectivement de 0,001 à 2 g/l d'ions d'un ou de plusieurs métaux choisis parmi le groupe comprenant Mn, Ce, Li, V, W, Mo, Mg, Zn, Co et Ni.

7. Procédé selon une ou plusieurs des revendications 1 à 6, **caractérisé en ce que** la solution aqueuse contient en outre respectivement de 0,001 à 1,5 g/l d'acide phosphorique, d'acide phosphoreux, d'acide phosphonique et/ou respectivement de leurs anions et/ou respectivement de leurs esters.

8. Procédé selon une ou plusieurs des revendications 1 à 7, **caractérisé en ce que** la solution aqueuse contient un ou plusieurs accélérateurs de la phosphatation choisis parmi le groupe comprenant :
de 0,05 à 2 g/litre d'ions de m-nitrobenzènesulfonate,
de 0,1 à 10 g/litre d'hydroxylamine sous forme libre ou liée,
de 0,05 à 2 g/litre d'ions de m-nitrobenzoate,
de 0,05 à 2 g/litre de p-nitrophénol,
de 1 à 70 mg/litre de peroxyde d'hydrogène sous forme libre ou liée,
de 0,05 à 10 g/litre de N-oxydes organiques,
de 0,1 à 3 g/litre de nitroguanidine,
de 1 à 500 mg/litre d'ions nitrite,
de 0,5 à 5 g/litre d'ions chlorate.

9. Procédé selon une ou plusieurs des revendications 1 à 8, **caractérisé en ce que** la solution aqueuse est exempte de chrome.

10. Procédé selon une ou plusieurs des revendications 1 à 9, **caractérisé en ce que** les carrosseries de véhicules automobiles ou les appareils ménagers présentent des surfaces constituées par au moins deux matières choisies parmi le groupe comprenant le zinc, l'aluminium, le magnésium, des alliages de ces métaux les uns avec les autres ou avec d'autres constituants d'alliages.
